# EUROPEAN PATENT SPECIFICATION

(11) **EP 4 254 010 B1**
(45) Date of publication and mention of the grant of the patent: **22.10.2025**
(21) Application number: 23158844.3
(22) Date of filing: 27.02.2023
(51) Int. Cl.: G01S 15/60, G01P 5/24

(54) **VESSEL SPEED MEASUREMENT DEVICE AND VESSEL SPEED MEASUREMENT METHOD**
SCHIFFSGESCHWINDIGKEITSMESSVORRICHTUNG UND SCHIFFSGESCHWINDIGKEITSMESSVERFAHREN
DISPOSITIF DE MESURE DE VITESSE DE NAVIRE ET PROCÉDÉ DE MESURE DE VITESSE DE NAVIRE

(30) Priority: 29.03.2022 JP 2022053775
(43) Date of publication of application: 04.10.2023
(73) Proprietor: Furuno Electric Company Limited, Hyogo 662-8580 (JP)
(72) Inventor: KAWANAMI, Satoshi, Nishinomiya-city, 662-8580 (JP); MUSHIAKE, Masahiko, Nishinomiya-city, 662-8580 (JP)
(74) Representative: Cleveland Scott York

(56) References cited:
- EP-A1- 3 401 700
- US-A- 5 224 075
- US-A1- 2015 025 834

## Description

The present invention relates to a vessel (ship) speed measurement device and a vessel speed measurement method that transmits sound waves into water and measures vessel speed based on the reflected waves.

Traditionally, vessel speed measurement devices that measure the speed of a vessel moving on water are known. In these types of vessel speed measurement devices, ultrasonic waves are transmitted into the water at a given tilt angle, and the vessel speed is calculated based on the frequency of the reflected waves. The frequency of the reflected wave varies from the frequency at the time of transmission due to Doppler effect depending on the vessel speed. Therefore, speed through water (i.e., speed of the vessel) can be calculated from the change in frequency.

To measure the speed through water of the vessel more accurately, there is a method to determine a rate of change of the velocity in the direction of the water depth. In this method, flow velocities for multiple depths are calculated based on the difference between the frequency of the ultrasonic wave at the time of transmission and the frequency of the reflected wave of the ultrasonic wave from the water, and the rate of change of these flow velocities is calculated. Then, the velocity at the depth at which this rate of change is below a predetermined threshold is calculated as the speed through water of the vessel.

US5,224,075 (Furuno Electric Co.) describes a system for detecting the speed of a ship or the velocity of a water current flow by utilizing the Doppler effect generated with ultrasonic signals propagating in the water. EP3401700A1 (Furuno Electric Co.) describes a device for measuring a log speed of a ship, and particularly to a device effective when applied to a ship speedometer and a ship speed acquiring method, in which a ship speed is measured at a plurality of depths.

A Japanese Patent Publication No. 5275486 describes a method for measuring vessel speed similar to that described above. In general, a flow is generated in the water due to the influence of wake and other factors associated with the progress of the vessel. On the other hand, it is preferable that the speed through water of the vessel is measured as the speed of the vessel relative to the water layer not affected by such disturbances. This makes it possible to accurately calculate the fuel consumption of a vessel using the speed through water of the vessel.

In the above measurement method, among the flow velocities calculated for each of the multiple depths, the flow velocity of the depth at which the rate of change of the flow velocity between the depths is below a predetermined threshold value is calculated as the speed through water of the vessel. However, this measurement method does not determine whether this depth is affected by disturbances such as wake. Therefore, this measurement method may not be able to accurately measure the speed through water of the vessel.

An object of the present invention is to provide a vessel speed measurement device and a vessel speed measurement method capable of accurately measuring the speed through water of the vessel.

In accordance with an embodiment, a first aspect of the present invention relates to a vessel speed measurement device. The vessel speed measurement device, according to the present embodiment, is provided with a transmitter/receiver and a signal processing circuit. Hereinafter, the transmitter/receiver is referred as a transducer having a transducer array. The transducer transmits ultrasonic waves into the water and receives reflected waves of the ultrasonic waves. Further, the signal processing circuit calculates the speed through water of the vessel on which the transducer is installed based on the reception signal output from the transducer. Based on the reception signal, the signal processing circuit identifies a target depth at which the speed through water of the vessel in the vertical direction is substantially zero, and acquires the speed through water of the vessel in the horizontal (a/k/a course) direction relative to the target depth as the speed through water of the vessel.

According to the first aspect of the present invention, the speed through water of the vessel in the horizontal direction is obtained for the target depth where the speed through water of the vessel in the vertical direction is substantially zero. The speed through water of the vessel relative to the water layer should be zero when water layer is not affected by disturbances such as wakes. Therefore, the speed through water of the vessel relative to the water layer not affected by disturbances such as wake can be obtained by acquiring the speed through water of the vessel in the horizontal direction relative to the target depth where the speed through water of the vessel in the vertical direction is substantially zero. Therefore, it is possible to measure the speed through water of the vessel more accurately.

In the vessel speed measurement device, the signal processing circuit may be configured to calculate an average value of the vertical speed through water of the vessel at a given time for each depth and to identify a depth where the calculated average value is substantially zero as the target depth.

According to this configuration, even if a temporary updraft or a vessel's up-and-down motion due to waves or swells occurs, these factors are averaged to prevent large fluctuations in the average value. Therefore, by acquiring the speed through water of the vessel for the depth at which this average value is substantially zero, the speed through water of the vessel relative to the water layer not affected by disturbances such as wake can be appropriately obtained.

In this configuration, the signal processing circuit may be configured to identify the target depth from a range near the minimum depth where the average value is substantially zero.

In one case, the greater the depth, the lower signal to noise ratio (S/N) of the reception signal, and therefore the lower the accuracy of the calculation of the speed through water of the vessel in the vertical and horizontal direction. On the other hand, the target depth is specified from the range near the minimum depth where the average value is substantially zero, so the target depth is specified within the range of the smallest possible depth. Therefore, the speed through water of the vessel in the vertical and horizontal directions can be accurately calculated from the reception signal with the S/N ratio kept high.

In this case, the signal processing circuit may be configured to specify the minimum target depth at which the average value is substantially zero.

According to this configuration, the smallest depth at which the mean value is substantially zero is specified for the target depth, so that the S/N ratio of the reception signal at the target depth is maintained at the highest within the range at which the mean value is substantially zero. Thus, the speed through water of the vessel in the vertical and horizontal directions can be calculated with better accuracy.

In the vessel speed measurement device, the signal processing circuit may be configured to acquire the average value of the speed through water of the vessel in the horizontal direction relative to the target depth at a given time as the speed through water of the vessel.

According to this configuration, the average value of the speed through water of the vessel in the horizontal direction for a given time is acquired as speed through water. Therefore, even when a disturbance such as a wake from another vessel occurs temporarily, the speed through water of the vessel can be stably obtained.

In the vessel speed measurement device, the transducer may be provided with a plurality of ultrasonic oscillators directed in different directions from each other, and the signal processing circuit can be configured to specify the target depth and acquire the speed through water of the vessel based on the reception signals output from the plurality of ultrasonic oscillators, respectively.

According to this configuration, the speed through water of the vessel in the horizontal direction and the vertical direction can be calculated from the reception signals output from the multiple ultrasonic transducer elements, respectively. Thus, for example, by averaging the vessel speed based on each reception signal, the vessel speed can be stably obtained while suppressing the effect of wobbling or rocking on the vessel.

In accordance with an embodiment, a second aspect of the present invention relates to vessel speed measurement methods. In a vessel speed measurement method, according to the present embodiment, an ultrasonic wave is transmitted, by a transducer installed on the vessel, into the water and a reflected wave of the ultrasonic wave is received by the transducer, a target depth at which the speed through water of the vessel in the vertical direction is substantially zero is identified based on the reception signal of the reflected wave, and the speed through water of the vessel in the horizontal direction with respect to the object depth is acquired as the speed through water of the vessel.

According to the vessel speed measurement method in this aspect, the same effect as the first aspect is achieved.

As described above, according to the present invention, it is possible to provide a vessel speed measurement device and a vessel speed measurement method that can more accurately measure the speed through water of the vessel.

The effect or significance of the present invention will be further clarified by the description of the following embodiment. However, the following embodiment is only one example when implementing the invention, and the invention is not in any way limited to those described in the following embodiment.

A third aspect of the present invention relates to a vessel speed measurement program configured to cause a processing module to execute processing comprising identifying, on the basis of a reception signal of a reflected wave of an ultrasonic wave transmitted into water, the target depth at which the speed through water of the vessel in the vertical direction is substantially zero; and acquiring the speed through water of the vessel in the horizontal direction with respect to the target depth as the speed through water.
FIG. 1 is a schematic view of the state of use of the vessel speed measurement device when viewed from the side of a vessel, according to an embodiment;
FIG. 2 is a schematic view of the use of the vessel speed measurement device when viewed from above the vessel, according to an embodiment;
FIG. 3 is a block diagram showing the configuration of a circuit of the vessel speed measurement device, according to the embodiment;
FIG. 4 is a graph showing the measurement results of actual measurement of the speed through water of the vessel in the horizontal direction, the speed through water of the vessel in the vertical direction, and the speed through water of the vessel in the lateral direction for each depth, according to an embodiment;
FIG. 5 is a graph schematically showing a relation between a depth and an average of speed through water of the vessel in the vertical direction, according to the embodiment;
FIG. 6 is a flow chart showing the measurement process of the speed through water of the vessel performed by the signal processing circuit, according to the embodiment;
FIG. 7 is a flow chart showing the measurement process of the speed through water of the vessel performed by the signal processing circuit according to the modification example 1, according to an embodiment;
FIG. 8 is a flow chart showing the measurement process of the speed through water of the vessel performed by the signal processing circuit, in accordance with the modification example 2, according to an embodiment;
FIG. 9(a) and FIG. 9(b) schematically show the transmission state of the transmission beam as seen from above the vessel, respectively, in accordance with Example 3 of the Modification, according to an embodiment;
FIG. 10 is a diagram schematically showing the state of transmission of the transmission beam as seen from the side of the vessel in modified example 3, according to an embodiment;
FIG. 11 is a flow chart showing the measurement process of the speed through water of the vessel performed by the signal processing circuit with respect to the other modifications according to an embodiment;

Embodiments of the present invention will be described below with reference to the drawings. The following embodiment shows an example in which the present invention is applied to a target detection device installed on the hull of a fishing boat or the like. However, the following embodiment is one embodiment of the present invention, and the present invention is not limited in any way to the following embodiments.

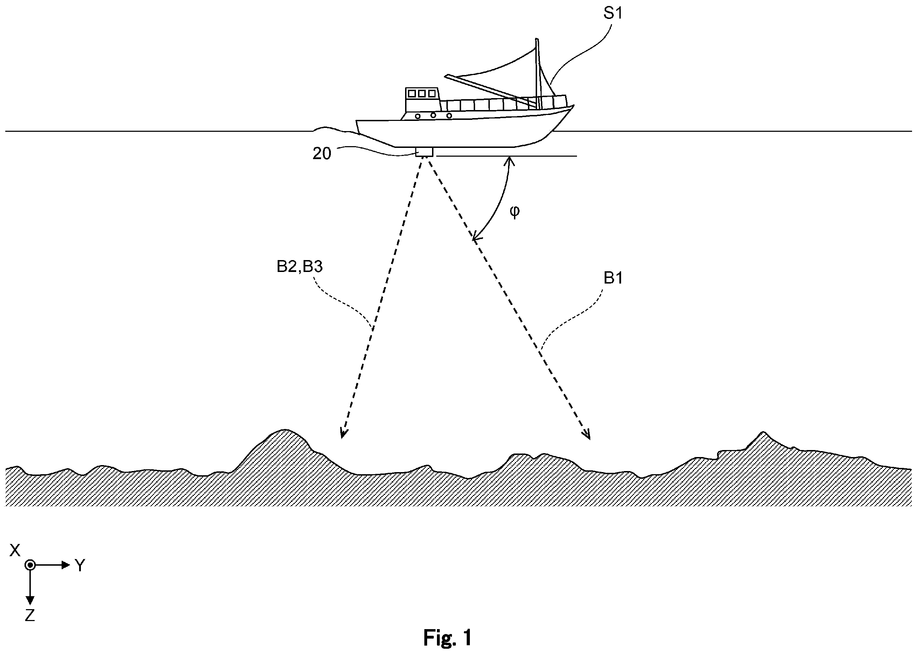

FIG. 1 is a schematic view of the state of use of the vessel speed measurement device when viewed from the side of a vessel S1.

In FIG. 1, X-Y plane is the horizontal plane and positive Z-axis direction is the vertical direction. The vessel S1 travels in the positive Y-axis direction. For convenience, only a transducer 20 of the vessel speed measurement device configuration is shown in FIG. 1.

The transducer 20 is installed on the bottom of the vessel S1. In the example shown in FIG. 1, the transducer 20 is installed on the bottom of the vessel S1 slightly from the center to the rear. Transmission beams B1, B2 and B3 are transmitted from the transducer 20 in different directions from each other. The transmission beams B1, B2 and B3 are ultrasonic waves. The transmission beams B1, B2 and B3 spread in a narrow range in an almost conical shape. Tilt angles φ of the transmission beams B1, B2 and B3 with respect to the horizontal plane are the same as each other. The tilt angle φ is, for example, about 60 degrees. However, the tilt angle φ is not limited to 60 degrees. The tilt angles φ of the transmission beams B1, B2 and B3 may be different from each other.

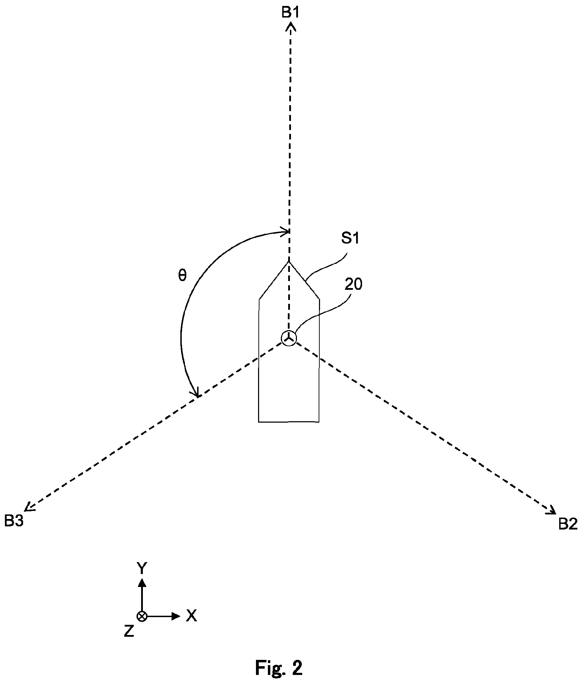

FIG. 2 is a schematic view of the use of the vessel speed measurement device when viewed from above the vessel S1.

As shown in FIG. 2, the transmission beam B1 is transmitted in the bow direction in plan view. The transmission beams B2 and B3 are transmitted toward the stern in plan view. In plan view, the horizontal angle *θ* between adjacent transmission beams is uniform. That is, the horizontal angle *θ* between adjacent transmission beams is 120 degrees. However, the horizontal angle *θ* between adjacent transmission beams need not be the same as each other.

Returning to FIG. 1, the transmission beams B1, B2 and B3 transmitted from the transducer 20 are reflected by suspended matter in the water such as plankton, and the reflected waves are received by the transducer 20. Receiving signals of each reflected wave are output from the transducer 20. These reception signals are processed by a control device 10 installed in the wheelhouse or the like of the vessel S1 to calculate the speed through water of the vessel S1.

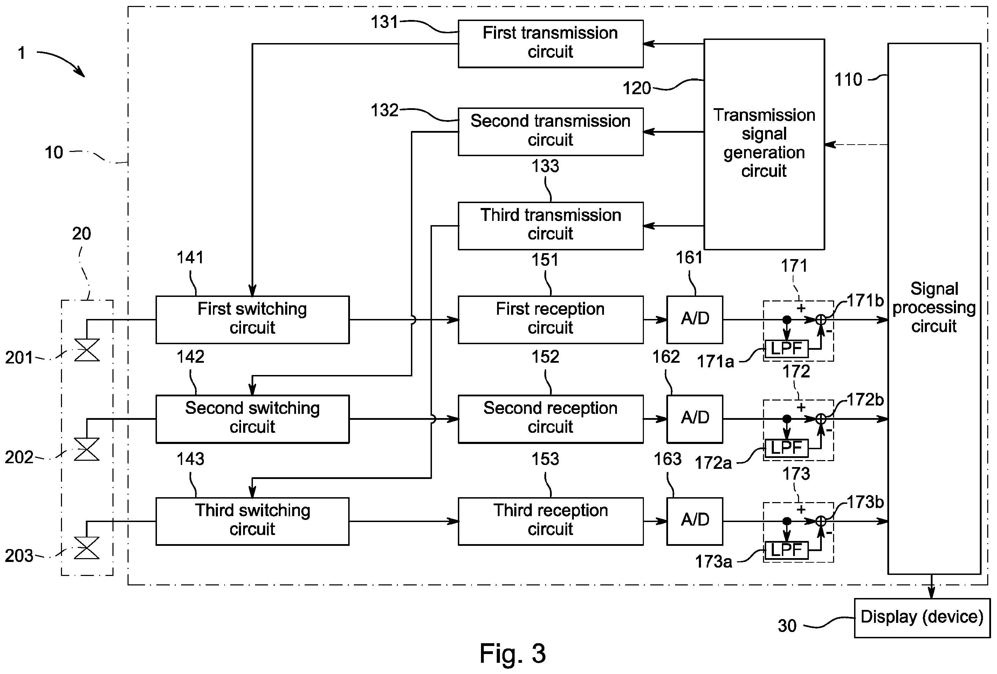

FIG. 3 is a block diagram showing the configuration of a circuit of the vessel speed measurement device 1.

The vessel speed measurement device 1 is equipped with a control device 10 and the transducer 20. The transducer 20 is equipped with three ultrasonic transducer elements 201, 202 and 203. The three ultrasonic transducer elements 201, 202, and 203 are pointed in different directions from each other. As a result, the transmission beams B1, B2 and B3 in FIG. 1 are transmitted from the ultrasonic transducer elements 201, 202 and 203, respectively, and the reflected waves are received by the ultrasonic transducer elements 201, 202 and 203.

The control device 10 includes a signal processing circuit 110, a transmission signal generation circuit 120, a first to third transmission circuits 131 - 133, a first to third switching circuits 141 - 143, a first to third reception circuits 151 - 153, an A/D conversion circuit 161 - 163, and a first to third tailing signal removal circuits 171 - 173.

The signal processing circuit 110 is provided with an arithmetic processing circuit such as a CPU and a memory, and executes a prescribed function according to a program held in the memory. The signal processing circuit 110 may include an arithmetic processing circuit such as a Filed Programmable Gate Arrays (FPGA). The transmission signal generation circuit 120 generates transmission signals for driving the ultrasonic transducer elements 201, 202 and 203, respectively, under control from the signal processing circuit 110, and outputs them to the first to the third transmission circuits 131 - 133. Each transmission signal is a sinusoidal signal of a predetermined frequency.

The first to third transmission circuits 131 - 133 amplify these input transmission signals and output them to the first to third switching circuits 141 - 143, respectively. The first to third switching circuits 141 - 143 respectively output these input transmission signals to the ultrasonic transducer 201 - 203. Thus, the ultrasonic transducer 201 - 203 transmits ultrasonic waves (transmission beams B1 to B3) of a prescribed frequency into the water, respectively. Then, when the ultrasonic transducer 201 - 203 receives the reflected waves of the ultrasonic waves, it outputs the reception signals based on the reflected waves to the first to third switching circuits 141 - 143.

The first to third switching circuits 141 - 143 output the reception signal input from the ultrasonic transducer 201 - 203 to the first to third reception circuits 151 - 153, respectively. The first to third reception circuits 151 - 153 amplify the input reception signal, extract the reception signal of a predetermined band including the frequency band of the reflected wave, and output it to the A/D conversion circuit 161 - 163, respectively. The A/D conversion circuit 161 - 163 samples each of these reception signals at a predetermined sampling period and converts them into digital signals.

The first to third tailing signal removal circuits 171 - 173 remove the tailing signal (a/k/a a "ringing signal") from the reception signal input from the A/D conversion circuit 161 - 163, respectively. Here, the tailing signal is the noise superimposed on the reception signal by the reverberation of the transmission wave in the ultrasonic transducer 201 - 203. That is, the tailing signal is an unwanted signal that appears like ringing immediately after the ultrasonic wave is transmitted due to factors such as the reflection of the transmission signal in the transducer 20 and the band-limited frequency characteristics of the ultrasonic transducers 201 - 203.

Thus, the tailing signal appears as a ringing immediately after the transmission of the ultrasonic wave, so that it overlaps with the period of receiving the reflected wave of the ultrasonic wave, i.e., near the beginning of the period of appearance of the reception signal based on the reflected wave. The first to third tailing signal removal circuits 171 - 173 remove the tailing signal superimposed on the reception signal in this way from the reception signal.

The first to third tailing signal removal circuits 171 - 173 are provided with a low-pass filters 171a to 173a and adders 171b to 173b, respectively. The low-pass filters 171a to 173a extract the frequency component of the tailing signal from the reception signal, invert the polarity of the extracted frequency component and input it to the adders 171b to 173b. The adders 171b to 173b add the frequency components input from the low-pass filters 171a to 173a to the reception signal. This removes the frequency component from the reception signal, resulting in a reception signal with the tailing signal removed. The reception signal from which the tailing signal is removed is sequentially output to the signal processing circuit 110 and held in the memory in the signal processing circuit 110.

Japanese Patent No. JP4828120B2 (Furuno Electric Co.), also published as US7245557B2, provides an example of a more detailed configuration and operation of the 1st to 3rd tailing signal removal circuits 171 - 173.

The signal processing circuit 110 calculates the speed through water of the vessel S1 for multiple depths based on the reception signals input from the first to third tailing signal removal circuits 171 - 173. More specifically, the signal processing circuit 110 calculates, for each of these three reception signals, the speed through water of the vessel S1 in the horizontal direction and the speed through water of the vessel S1 in the vertical direction (up-to-down direction) for each depth. Depth can be specified by the time of the reception signal on the time axis (the time taken from the transmission to that time).

These speeds through water of the vessel S1 are calculated based on the Doppler effect from the frequency difference between the transmission signal and the reception signal at each depth.

For example, for the reception signal input from the first tailing signal removal circuit 171, that is, the reception signal based on the transmission beam B1 in FIG. 1, the speed through water of the vessel S1 in the direction of the transmission beam B1 is calculated based on the Doppler effect from the frequency difference between the transmission signal and the reception signal at each depth. Based on the horizontal angle θ and the tilt angle φ, the speed through water of the vessel S1 of each depth in the horizontal direction and the speed through water of the vessel S1 of each depth in the vertical direction are calculated from the speed through water of the vessel S1.

As for the reception signals based on the transmission beams B2 and B3 in FIG. 1, as above, the speed through water of the vessel S1 at each depth in the direction of the transmission beams B2 and B3 is calculated, and from this speed through water of the vessel S1, the speed through water of the vessel S1 at each depth in the horizontal direction and the speed through water of the vessel S1 at each depth in the vertical direction are calculated based on the horizontal angle θ and the tilt angle φ.

Then, the signal processing circuit 110 calculates the speed through water of the vessel S1 in the horizontal direction for each depth by averaging the three speeds through water of the vessel S1 in the horizontal direction based on the transmission beams B1 to B3 for each depth, and calculates the speed through water of the vessel S1 in the vertical direction for each depth by averaging the three speeds through water of the vessel S1 in the vertical direction based on the transmission beams B1 to B3 for each depth.

It should be noted that the speed through water of the vessel S1 in the left-to-right (lateral) direction (X-axis direction), which will be described later, is also calculated based on the horizontal angle θ and the tilt angle φ from the speed of vessel S1 in each depth in each transmission beam direction, and is further averaged for each depth.

The signal processing circuit 110 determines the speed through water of the vessel S1 from the speed through water of the vessel S1 in the horizontal direction and the vertical direction of each depth thus calculated. More specifically, the signal processing circuit 110 identifies a target depth at which the speed through water of the vessel S1 in the vertical direction is substantially 0, and determines the speed through water of the vessel S1 in the horizontal direction relative to this target depth to the speed through water of the vessel S1.

In other words, if a water layer is not affected by disturbances such as wake, the speed through water of the vessel S1 with respect to that layer in the vertical direction should be virtually zero. Therefore, as described above, by acquiring speed through water of the vessel S1 in the horizontal direction relative to the target depth where speed through water of the vessel S1 in the vertical direction is substantially zero, the speed through water of the vessel S1 relative to the water layer not affected by disturbances such as wake can be obtained. This makes it possible to accurately measure the speed through water of the vessel S1 in the horizontal direction.

The signal processing circuit 110 causes the display device 30 to display the measured speed through water of the vessel S1 in the horizontal direction. The display device 30 is installed, for example, in the wheelhouse of the vessel S1.

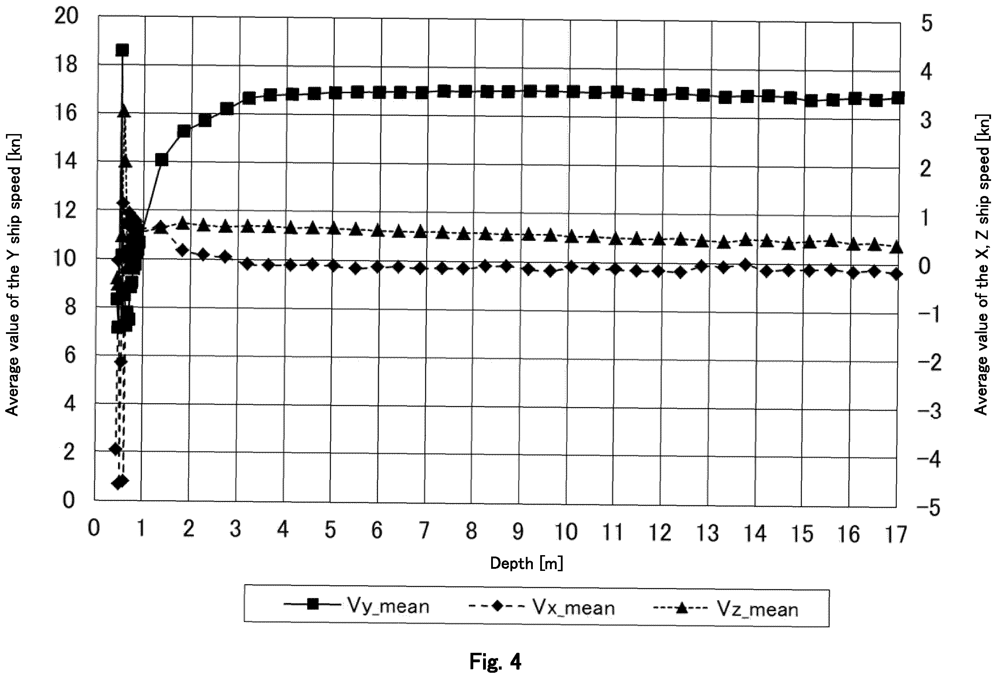

FIG. 4 is a graph showing the measurement results of actual measurement of the speed through water of the vessel S1 in the horizontal direction, the speed through water of the vessel S1 in the vertical direction, and the speed through water of the vessel S1 in the lateral direction for each depth, according to an embodiment.

Here, the measurement results are shown when the vessel S1 is going straight. In addition, the graph plots the average values of Y-, Z-, and X-vessel speeds for each depth calculated for the period from this measurement point until a specified time ago. In this measurement, the above prescribed time for averaging was set at 15 minutes.

Referring to the graph in FIG. 4, as the depth increases, the Z vessel speed gradually approaches 0 and the Y vessel speed gradually converges to 17 knots. Therefore, it is inferred that the influence of the disturbance on the water layer decreases as the depth increases, and when the depth is deeper than the prescribed depth, the influence of the disturbance almost disappears and the water layer becomes almost stationary. In addition, in the range where the Z vessel speed is effectively 0, we infer that the Y vessel speed will converge to 17 knots, the original speed through water relative to the water layer not affected by disturbance.

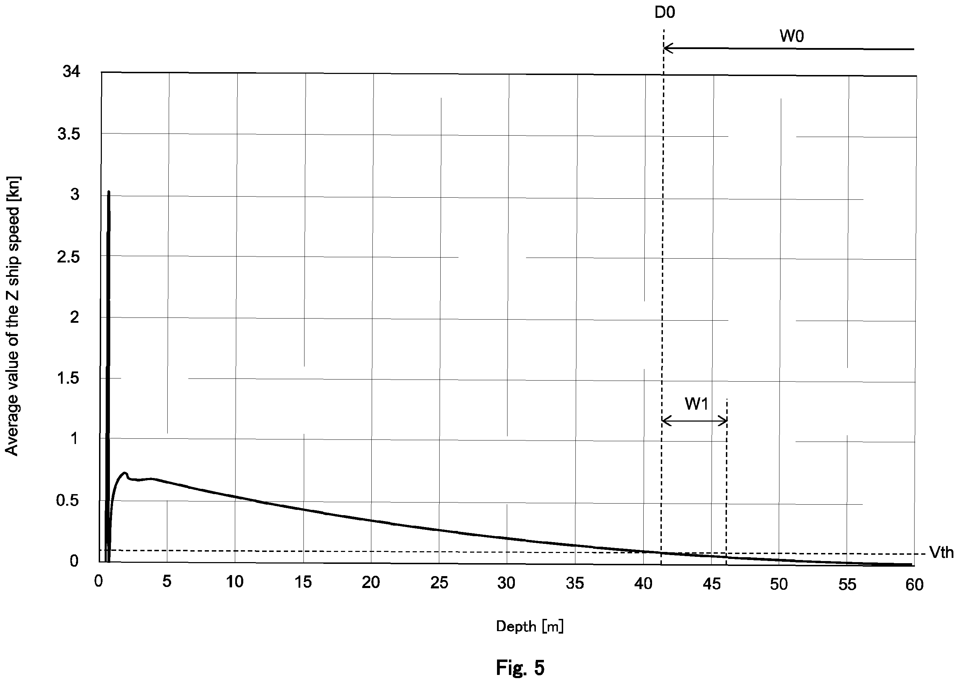

FIG. 5 is a graph schematically showing a relation between a depth and an average speed of the vessel S1 in the vertical direction.

In the graph of FIG. 5, the range up to a depth of 0 - 17 m reflects the graph of FIG. 4, and the range after a depth of 17 m reflects the same decreasing trend as the range of 5 - 17 m in the graph of FIG. 4.

Here, whether the Z vessel speed is substantially zero or not can be determined by comparing the Z vessel speed with the threshold Vth. This threshold Vth may be set to a value near zero. For example, the threshold Vth can be set to something like 0.1 to 0.3 for 0. When the Z vessel speed is included in the range of this threshold Vth, the Z vessel speed is determined to be substantially zero. In the example of FIG. 5, the minimum depth D0 at which the Z vessel speed is included in the threshold Vth is about 41.5 m. Therefore, in the range WO above this depth D0, the Z vessel speed becomes virtually zero almost uniformly.

Therefore, by selecting the Y-vessel speed calculated for any of the depths included in this range WO as the Y-vessel speed of vessel S1, the speed relative to the water layer without any effect of external disturbance can be obtained.

However, the deeper the depth will be, the lower the S/N of the reception signal will become. For this reason, the S/N of the reception signal decreases at depths far deeper from depth D0 within the range WO, which makes it difficult to accurately calculate the Y vessel speed and the Z vessel speed. Therefore, it is preferable that the depth range of the object for calculating the Y vessel speed and the Z vessel speed is set to the range W1 near the minimum depth D0, where the Z vessel speed is substantially zero, and even more preferably to the depth D0. The range W1 can be set, for example, from a few meters to about 10 meters.

Referring to the graph in FIG. 4, the X-vessel speed also converges to zero as the depth increases. For this reason, a method of obtaining the Y-vessel speed calculated for the depth included in the range where the X-vessel speed is substantially zero as the speed through water of the vessel S1 may also be considered.

However, the fact that the X-vessel speed converges to zero in the graph of FIG. 4 is due to the fact that the vessel S1 is going straight, and if the vessel S1 pivots from side to side or this causes drift in the vessel S1, the X-vessel speed at each depth deviates from zero. Thus, because the X-vessel speed at each depth can vary dynamically depending on the progress of vessel S1, it can be estimated that it is difficult to use the Y-vessel speed calculated for the depth included in the depth range where the X-vessel speed is substantially zero for the speed through water of the vessel S1.

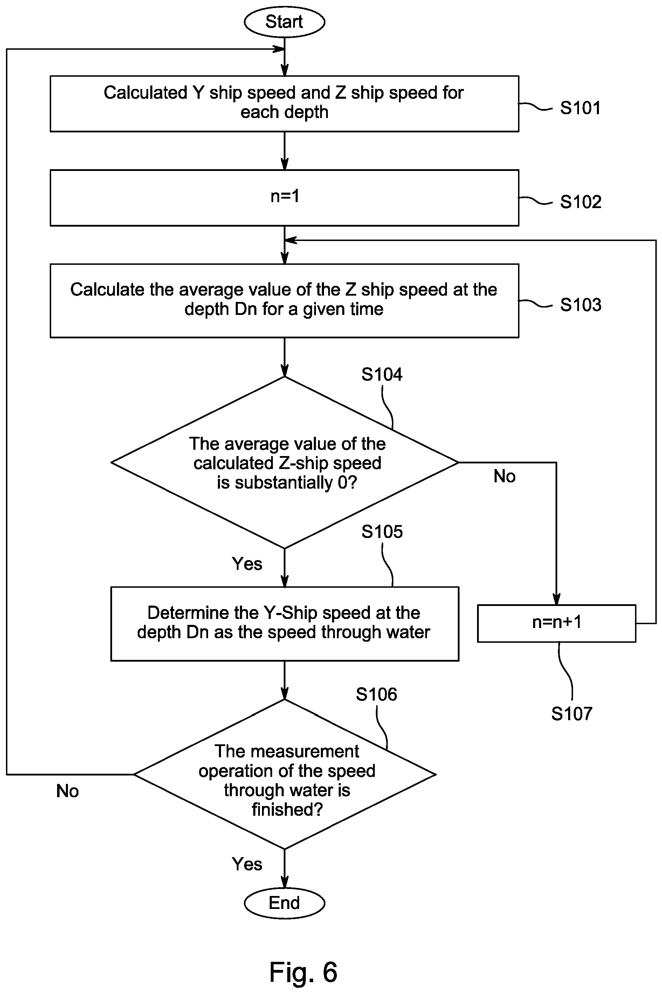

FIG. 6 is a flow chart showing the measurement process of the speed through water of the vessel S1 executed by the signal processing circuit 110.

At first, calculate Y vessel speed and Z vessel speed for each depth, at step S101. A variable (n) for initial value of depth Dn is taken as n=1, at step S102. Here, the depth Dn increases by a predetermined distance (For example, 0.5 m) as the variable n increases. The initial value of depth Dn (variable n = 1) does not necessarily have to be zero plus a predetermined distance (For example, 0.5 m) or a fixed value such as 3 m or 5 m. Calculate the average value of the Z ship speed at the depth Dn for a given time, at step S103. Here, the average value of the Z vessel speed is calculated by averaging the Z vessel speed of the relevant depth Dn calculated during the period from the current measurement time point to a predetermined time before, as in the case of FIG. 4.

Successively, the average value of the calculated Z vessel speed is substantially 0, at step S104. The signal processing circuit 110 determines whether the average value of the calculated Z-vessel speed is substantially 0. Here, as in the case of FIG. 5, it is determined whether the Z vessel speed is within the range of zero to the threshold Vth. If the calculated mean value of the Z-vessel speed is not substantially 0 (S104: NO), the signal processing circuit 110 adds 1 to the variable n (S107) and returns the processing to step S103. With this, processing from step S103 onward is performed for the next depth Dn. Thus, the processing is repeatedly performed in steps S103 and S104 while the depth Dn to be processed is changed in the increasing direction until the average value of the Z vessel speed becomes substantially 0.

Then, when the average value of the Z-vessel speed becomes substantially 0 (S104: YES), the signal processing circuit 110 determines the Y-vessel speed corresponding to the current depth Dn among the Y-vessel speeds of each depth stored in the memory in step S101 as the speed through water in the horizontal direction of vessel S1, at step S105. Then, the signal processing circuit 110 determines whether or not the measurement of the speed through water of the vessel S1 has been completed, at step S106, and if not (S106: NO), the processing is returned to step S101, and the same processing is performed for the transmission of the next ultrasonic wave (transmission beams B1 to B3).

In this way, the signal processing circuit 110 repeatedly executes the processes of steps S101 to S105 and S107 each time the ultrasonic waves (transmission beams B1 to B3) are transmitted, and acquires the speed through water of the vessel S1 in the horizontal direction. The signal processing circuit 110 causes the display device 30 to display at any time the speed through water of the vessel S1 acquired at each measurement point. Then, when the measurement operation of the speed through water of the vessel S1 is finished (S106: YES), the signal processing circuit 110 finishes the processing of FIG. 6.

In the processing of FIG. 6, the depth Dn at which the determination in step S104 is YES is the depth at which the Z vessel speed first falls within the threshold value Vth in the depth direction, corresponding to the depth D0 in FIG. 5. In other words, in the processing of FIG. 6, the minimum depth at which the average value of the Z vessel speed is substantially zero is specified as the target depth for calculating the speed through water of the vessel S1 in the horizontal direction.

According to this embodiment, the following effects can be achieved.

As shown in FIG. 6, for a depth Dn (target depth) at which the speed through water of the vessel S1 in the vertical direction (Z vessel speed) is substantially 0 (S104: YES), the speed through water of the vessel S1 in the horizontal direction is obtained (S105). If a water layer is not affected by disturbances such as wakes, the vertical speed through water of the vessel S1 relative to that layer should be zero. Therefore, as described above, by acquiring speed through water of the vessel S1 in the horizontal direction relative to the depth Dn (the target depth) at which speed through water of the vessel S1 in the vertical direction (Z-vessel speed) is substantially zero, the speed through water of the vessel S1 relative to the water layer not affected by disturbances such as wake can be obtained. Therefore, it is possible to measure the speed through water of the vessel S1 more accurately.

As shown in FIG. 6, the signal processing circuit 110 calculates an average value of the vertical speed through water (Z vessel speed) at a given time for each depth (S103), and specifies the depth where the calculated average value is substantially 0 as the target depth (S104, S105). Thus, even if a temporary updraft or the up-and-down movement of vessel S1 due to waves or swells occurs, these factors are averaged to prevent large fluctuations in the average value due to these factors. Therefore, by acquiring the speed through water (Y vessel speed) for the depth at which this average value is substantially zero, the speed through water of the vessel S1 to the water layer, not affected by disturbances such as wake can be appropriately acquired.

As shown in FIG. 5, the signal processing circuit 110 preferably identifies the target depth for acquiring the Y vessel speed from the range W1 near the minimum depth D0 where the average value of the Z vessel speed is substantially 0. As a result, the target depth is specified in the range of the smallest possible depth, so that the speed through water of the vessel (Z Vessel Speed, Y Vessel Speed) in the vertical and horizontal directions can be accurately calculated from the reception signal with the S/N maintained high.

In the above embodiment, as shown in FIG. 6, the signal processing circuit 110 identifies the minimum depth at which the average value of the Z vessel speed becomes substantially 0 as the target depth for acquiring the Y vessel speed (S104, S105). This keeps the S/N ratio of the reception signal at the target depth the highest in the range WO where the average value is substantially zero. Thus, the speed through water of the vessel (Z Vessel Speed, Y Vessel Speed) in the vertical and horizontal directions can be calculated with better accuracy.

As shown in FIGS. 1 to 3, the transducer 20 includes a plurality of ultrasonic oscillators 201 - 203 directed in different directions from each other. Then, the signal processing circuit 110 identifies the target depth and acquires the speed through water of the vessel S1 by the processing of FIG. 6 based on the reception signals output from the multiple ultrasonic transducer elements 201 - 203, respectively. With this configuration, the vessel speed (Y vessel speed, Z vessel speed) can be calculated from the reception signals output from the multiple ultrasonic transducer elements 201 - 203, respectively. Therefore, by averaging these vessel speeds as described above, it is possible to stably obtain the vessel speed while suppressing the effect of wobbling or rocking on the vessel S1.

According to a first example, both the Z vessel speed and the Y vessel speed are calculated for each depth in step S101 of FIG. 6. In contrast, in change to the first example, only Z vessel speed is calculated for each depth, and Y vessel speed is calculated only for the target depth.

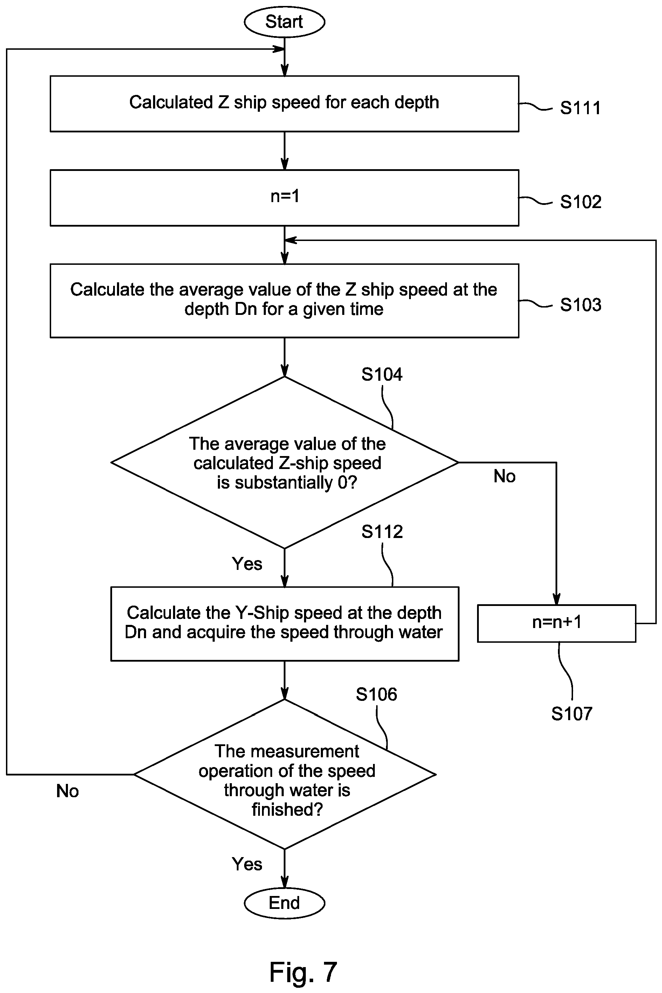

FIG. 7 is a flow chart showing the measurement process of the speed through water of the vessel S1, which is executed by the signal processing circuit 110 in relation to the modification to the first example.

In the flowchart of FIG. 7, steps S101 and S105 in the flowchart of FIG. 6 are changed to steps S111 and S112, respectively. The processing of the other steps in FIG. 7 is similar to the corresponding steps in FIG. 6.

The signal processing circuit 110 calculates only the Z-vessel speed from the reception signal for each depth and stores it in the memory, at step S111. The signal processing circuit 110 uses the Z-vessel speed of each depth stored in the memory to perform the processing of steps S102 to S104 and S107 in the same manner as described above. Accordingly, when the determination in step S104 is YES, the signal processing circuit 110 calculates the Y-vessel speed with respect to the current depth Dn from the reception signal acquired by the current transmission, and acquires the calculated Y-vessel speed as the speed through water of the vessel S1, at step S112. The signal processing circuit 110 repeatedly executes the processing after step S111 for each ultrasonic wave until the measurement is finished (S106: NO).

According to change in first example, the Y vessel speed is calculated only for the depth Dn (target depth) when the determination in step S104 is YES. Therefore, compared with the processing in FIG. 6, the processing load for the calculation of the Y vessel speed can be reduced, and the speed through water of the vessel S1 can be calculated more efficiently.

According to a second example, in step S105 of FIG. 6, the Y vessel speed relative to the target depth is acquired as the speed through water of vessel S1. On the other hand, in Change to the second example, the average value of the Y vessel speed for the target depth at a given time is acquired as the speed through water of the vessel S1.

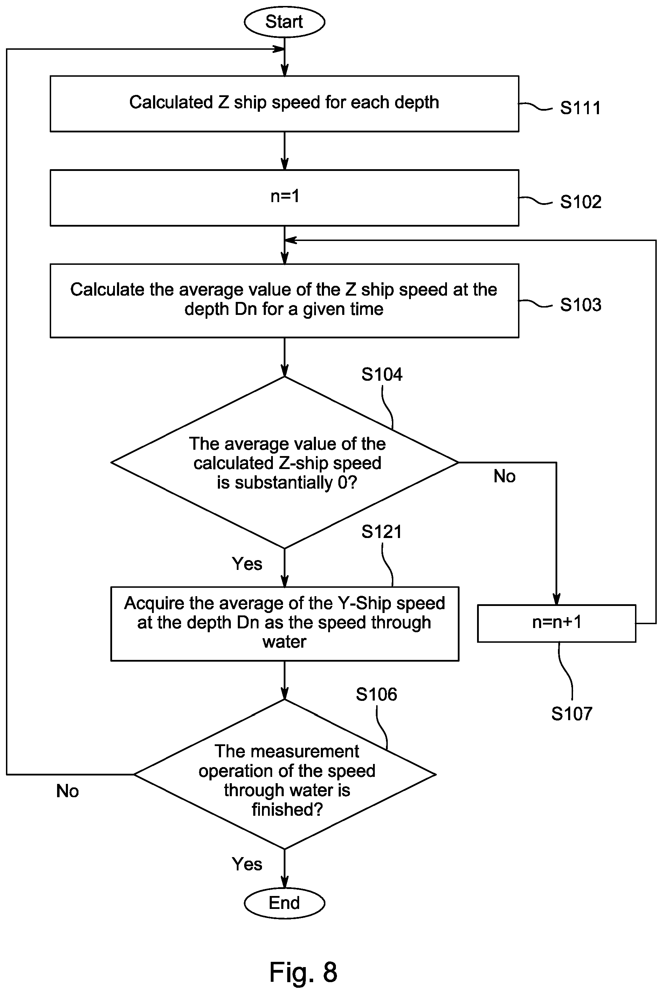

FIG. 8 is a flow chart showing the measurement process of the speed through water of the vessel S1, which is executed by the signal processing circuit 110, in accordance with the modification to the second example.

In the flowchart of FIG. 8, step S105 in the flowchart of FIG. 6 is changed to step S121. The processing of the other steps in FIG. 7 is similar to the corresponding steps in FIG. 6.

The signal processing circuit 110 calculates the average value of the Y vessel speed with respect to the depth Dn, at step S111 when the determination in step S104 becomes YES. More specifically, the signal processing circuit 110 extracts from the memory the Y-vessel speed of the relevant depth Dn from the current measurement time to a specified time (a specified number of times) before, and calculates the average value of the extracted Y-vessel speed. Then, the signal processing circuit 110 acquires the average value of the calculated Y vessel speed as the speed through water of the vessel S1.

Further, acquire the average of the Y vessel speed at the depth Dn as the speed through water, at step 121. Here, the prescribed time for averaging in step S121 may be the same as or different from the prescribed time when the average value of the Z vessel speed is calculated in step S103. For example, the prescribed time for averaging in step S121 may be a period corresponding to a measurement time point from the current measurement time point to 10 or more times before.

According to the processing in FIG. 8, the average value of the speed of the Y vessel for a given time is acquired as the speed through water of the vessel S1. Therefore, even when disturbance such as wake from another vessel occurs temporarily, the speed through water of the vessel S1 can be stably obtained.

According to a third example, as shown in FIG. 1 and FIG. 2, three transmission beams B1 to B3 are transmitted from the transducer 20 in a predetermined direction, respectively. However, the number and direction of transmission beams B1 transmitted from the transceiver 20 are not limited to this.

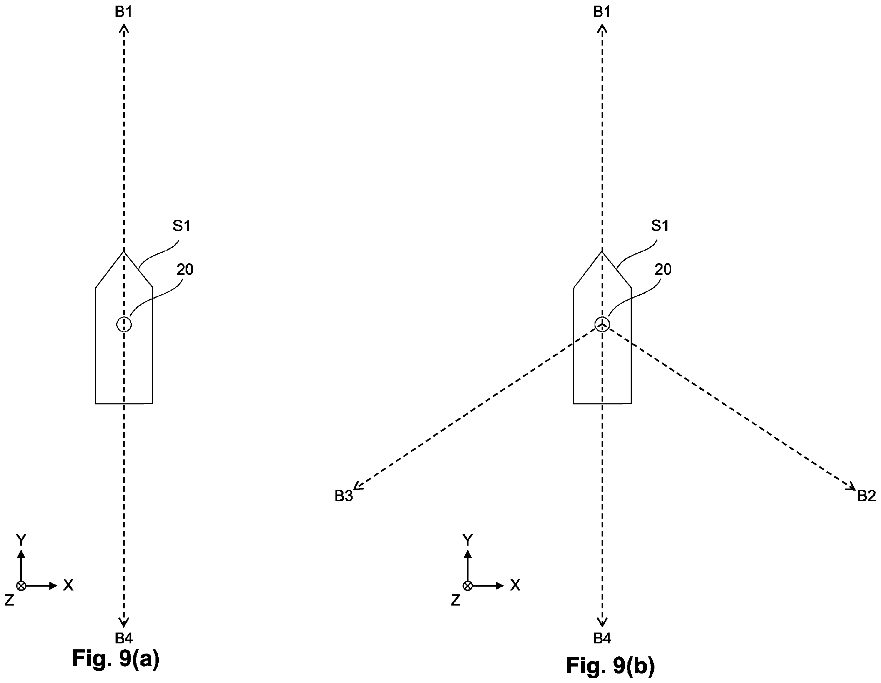

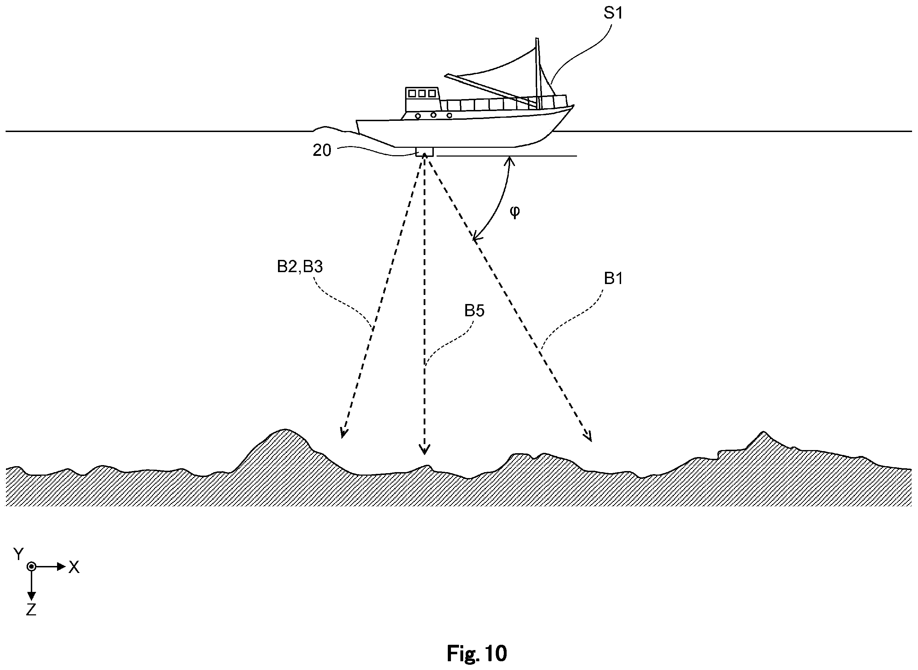

For example, as shown in FIG. 9(a), the transmission beams B1 and B4 may be transmitted at a prescribed tilt angle in the fore-and-aft direction of the vessel S1, or as shown in FIG. 9(b), in addition to the transmission beams B1-B3, the transmission beam B4 may be further transmitted at a prescribed tilt angle in the stern direction of the vessel S1. As shown in FIG. 10, in addition to the transmission beams B1 to B3, the transmission beam B5 may be further transmitted directly below the vessel S1, or only the transmission beam B1 may be transmitted.

In these modification examples, the number of ultrasonic oscillators placed in the transducer 20 is changed according to the number of transmission beams. Each ultrasonic transducer is oriented toward the transmitting direction of the corresponding transmission beam. Even in these modified examples, as in the above embodiment, the Y vessel speed and the Z vessel speed are calculated for each depth from the reception signal corresponding to each transmission beam, and the average values of the Y vessel speed and the Z vessel speed are calculated for each depth by averaging the Y vessel speed and the Z vessel speed at a given time for each depth.

Therefore, even with the configuration of the modification to the third example, it is possible to obtain the speed through water of the vessel S1 for the water layer not affected by the disturbance by the treatment of FIG. 6 to FIG. 8 and to measure the speed through water of the vessel S1accurately.

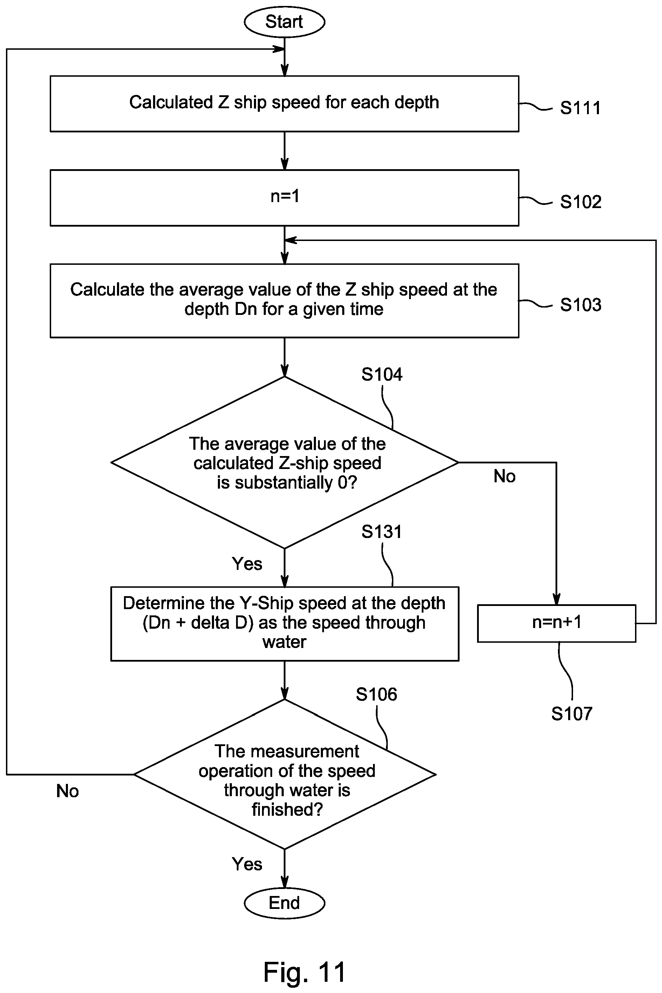

In the above embodiment and its modification, the minimum depth at which the average value of the Z vessel speed is substantially zero is specified as the target depth to obtain the vessel S1's speed through water (Y vessel speed), but the method of specifying the target depth is not limited to this. For example, as shown in step S131 in FIG. 11, the depth (depth deeper than the depth Dn by a prescribed distance, Δ D) obtained by adding the prescribed distance, Δ D (For example, a few meters), to the depth Dn (corresponding to the depth D0 in FIG. 5) when the decision in step S104 is YES is specified as the target depth, and the Y-vessel speed for this depth may be obtained as the speed through water of the vessel S1.

Also, in the processing of FIG. 6 to FIG. 8 and FIG. 11, the depth Dn at which the mean value of the Z vessel speed first becomes substantially zero is identified as the target depth, but even at a depth Dn at which the mean value of the Z vessel speed first become substantially zero, if the mean value of the Z vessel speed of the depth following it is not substantially zero, this depth Dn may not be identified as the target depth. In this case, when a depth Dn occurs after which the average value of the Z vessel speed becomes substantially zero, this depth Dn can be specified as the target depth on the condition that the average value of the Z vessel speed becomes substantially zero for a certain number of depths following this depth Dn.

In addition, the processing for acquiring the speed through water of the vessel S1 is not limited to the processing shown in FIG. 6 to FIG. 8 and FIG. 11, and may be performed by processing processes other than those shown in FIG. 6 to FIG. 8 and FIG. 11, as long as the processing identifies the target depth where the Z speed is substantially 0 based on the reception signal and acquires the Y speed for the specified target depth as the speed of Vessel S1.

In addition, the configuration of the vessel speed measurement device 1 is not limited to the configuration shown in FIG. 3 and can be changed accordingly. For example, the first to third tailing signal removal circuits 171 - 173 may be omitted from the configuration of FIG. 3. In this case, the signal processing circuit 110 may perform the processing shown in FIG. 6 to FIG. 8 and FIG. 11 for a depth range deeper than the depth range where the tailing signal is superimposed, for example.

In the above embodiment and its modification, the vessel speed measurement device 1 has only a vessel speed measuring function, but the vessel speed measurement device 1 may have other functions such as a target detection function along with a vessel speed measuring function. The vessel speed measurement device 1 may be mounted on a device having other functions in sonar or the like, and may be included in this device as one of the functions performed by this device.

Embodiments of the present invention may be varied as appropriate within the scope of the claims.

### [List of Reference Numerals]

1 Vessel Speed Measurement Device
20 Transducer (Transmitter/Receiver)
110 Signal Processing Circuit
201-203 Ultrasonic Transducer (Piezoelectric/Piezoceramic) Elements

## Claims

1. A vessel speed measurement device (1) comprising:
a transducer (20) configured to transmit ultrasonic waves into water and to receive reflected waves of the ultrasonic waves; and
a signal processing circuit (110) configured:
to calculate speed through water of a vessel (S1) on which the transducer (20) is installed, based on the reception signal output from the transducer (20);
**characterised in that** the signal processing circuit (110) is further configured:
to identify a target depth at which the speed through water of the vessel (S1) in the vertical direction is substantially zero based on the reception signal; and
to acquire the speed through water of the vessel (S1) in the horizontal direction with respect to the target depth as the speed through water of the vessel (S1).

2. The vessel speed measurement device (1) according to claim 1, wherein:
the signal processing circuit (110) is further configured:
to calculate an average value of the vertical speed through water of the vessel (S1) at a given time for each depth; and
to identify the depth where the calculated average value is substantially zero as the target depth.

3. The vessel speed measurement device (1) according to claim 2, wherein:
the signal processing circuit (110) is further configured to identify the target depth from a range near the minimum depth where the average value is substantially zero.

4. The vessel speed measurement device (1) according to claim 3, wherein:
the signal processing circuit (110) is further configured to identify the minimum target depth at which the average is substantially zero.

5. The vessel speed measurement device (1) according to any of claims 2 to 4, wherein:
the signal processing circuit (110) is further configured to acquire the average value of the speed through water of the vessel (S1) in the horizontal direction for the target depth at a given time as the speed through water of the vessel (S1).

6. The vessel speed measurement device (1) according to any of the preceding claims, wherein:
the transducer (20) comprises a plurality of ultrasonic oscillators directed in different directions from each other; and
the signal processing circuit (110) is further configured:
to identify the target depth; and
to acquire the speed through water of the vessel (S1) based on the reception signals output from the multiple ultrasonic oscillators, respectively.

7. A vessel speed measurement method, comprising:
by a transducer (20) installed on the vessel, transmitting ultrasonic waves into water and receiving reflected waves of said ultrasonic waves; and
**characterised by**:
identifying, on the basis of the reception signal of the reflected wave, the target depth at which the speed through water of the vessel in the vertical direction is substantially zero; and
acquiring the speed through water of the vessel in the horizontal direction with respect to the target depth as the speed through water of the vessel.

8. A vessel speed measurement program configured to cause a processing module to execute processing, **characterised in that** the processing comprises:
identifying, on the basis of a reception signal of a reflected wave of an ultrasonic wave transmitted into water, the target depth at which the speed through water of the vessel in the vertical direction is substantially zero; and
acquiring the speed through water of the vessel in the horizontal direction with respect to the target depth as the speed through water.

## Patentansprüche

1. Schiffsgeschwindigkeitsmessgerät (1), das Folgendes umfasst:
einen Wandler (20), der zum Aussenden von Ultraschallwellen in Wasser und zum Empfangen reflektierter Wellen der Ultraschallwellen konfiguriert ist; und
eine Signalverarbeitungsschaltung (110), konfiguriert zum:
Berechnen von Geschwindigkeit eines Schiffs (S1), auf dem der Wandler (20) installiert ist, durch Wasser auf der Basis des von dem Wandler (20) ausgegebenen Empfangssignals;
**dadurch gekennzeichnet, dass** die Signalverarbeitungsschaltung (110) ferner konfiguriert ist zum:
Identifizieren einer Zieltiefe, bei der die Geschwindigkeit des Schiffs (S1) durch Wasser in vertikaler Richtung im Wesentlichen null ist, auf der Basis des Empfangssignals; und
Erfassen der Geschwindigkeit des Schiffs (S1) durch Wasser in horizontaler Richtung in Bezug auf die Zieltiefe als die Geschwindigkeit des Schiffs (S1) durch Wasser.

2. Schiffsgeschwindigkeitsmessgerät (1) nach Anspruch 1, wobei:
die Signalverarbeitungsschaltung (110) ferner konfiguriert ist zum:
Berechnen eines Durchschnittswerts der vertikalen Geschwindigkeit des Schiffs (S1) durch Wasser zu einem gegebenen Zeitpunkt für jede Tiefe; und
Identifizieren der Tiefe, bei der der berechnete Durchschnittswert im Wesentlichen Null ist, als die Zieltiefe.

3. Schiffsgeschwindigkeitsmessgerät (1) nach Anspruch 2, wobei:
die Signalverarbeitungsschaltung (110) ferner zum Identifizieren der Zieltiefe aus einem Bereich nahe der Mindesttiefe konfiguriert ist, bei der der Durchschnittswert im Wesentlichen Null ist.

4. Schiffsgeschwindigkeitsmessgerät (1) nach Anspruch 3, wobei:
die Signalverarbeitungsschaltung (110) ferner zum Identifizieren der minimalen Zieltiefe konfiguriert ist, bei der der Durchschnittswert im Wesentlichen Null ist.

5. Schiffsgeschwindigkeitsmessgerät (1) nach einem der Ansprüche 2 bis 4, wobei:
die Signalverarbeitungsschaltung (110) ferner zum Erfassen des Durchschnittswerts der Geschwindigkeit des Schiffs (S1) durch Wasser in horizontaler Richtung für die Zieltiefe zu einem gegebenen Zeitpunkt als die Geschwindigkeit des Schiffs (S1) durch Wasser konfiguriert ist.

6. Schiffsgeschwindigkeitsmessgerät (1) nach einem der vorherigen Ansprüche, wobei:
der Wandler (20) mehrere Ultraschalloszillatoren umfasst, die in unterschiedliche Richtungen zueinander ausgerichtet sind; und
die Signalverarbeitungsschaltung (110) ferner konfiguriert ist zum:
Identifizieren der Zieltiefe; und
Erfassen der Geschwindigkeit des Schiffs (S1) durch Wasser auf der Basis der jeweils von den mehreren Ultraschalloszillatoren ausgegebenen Empfangssignale.

7. Schiffsgeschwindigkeitsmessverfahren, das Folgendes beinhaltet:
Aussenden, durch einen auf dem Schiff installierten Wandler (20), von Ultraschallwellen in Wasser und Empfangen reflektierter Wellen der genannten Ultraschallwellen; und
**gekennzeichnet durch**:
Identifizieren, auf der Basis des Empfangssignals der reflektierten Welle, der Zieltiefe, bei der die Geschwindigkeit des Schiffs durch Wasser in vertikaler Richtung im Wesentlichen null ist; und
Erfassen der Geschwindigkeit des Schiffs durch Wasser in horizontaler Richtung in Bezug auf die Zieltiefe als die Geschwindigkeit des Schiffs durch Wasser.

8. Schiffsgeschwindigkeitsmessprogramm, das zum Veranlassen eines Verarbeitungsmoduls zum Ausführen einer Verarbeitung konfiguriert ist, **dadurch gekennzeichnet, dass** die Verarbeitung Folgendes beinhaltet:
Identifizieren, auf der Basis eines Empfangssignals einer reflektierten Welle einer in Wasser ausgesendeten Ultraschallwelle, der Zieltiefe, bei der die Geschwindigkeit des Schiffs durch Wasser in vertikaler Richtung im Wesentlichen null ist; und
Erfassen der Geschwindigkeit des Schiffs durch Wasser in horizontaler Richtung in Bezug auf die Zieltiefe als die Geschwindigkeit durch Wasser.

## Revendications

1. Dispositif de mesure de vitesse de navire (1) comprenant :
un transducteur (20) configuré pour émettre des ondes ultrasonores dans l'eau et pour recevoir des ondes réfléchies des ondes ultrasonores ; et
un circuit de traitement de signaux (110) configuré pour :
calculer la vitesse dans l'eau d'un navire (S1) sur lequel le transducteur (20) est installé, sur la base du signal de réception délivré en sortie par le transducteur (20) ;
le dispositif de mesure de navire étant **caractérisé en ce que** le circuit de traitement de signaux (110) est en outre configuré pour :
identifier une profondeur cible où la vitesse dans l'eau du navire (S1) dans la direction verticale est sensiblement nulle, sur la base du signal de réception ; et
acquérir, en tant que vitesse dans l'eau du navire (S1), la vitesse dans l'eau du navire (S1) dans la direction horizontale par rapport à la profondeur cible.

2. Dispositif de mesure de vitesse de navire (1) selon la revendication 1,
le circuit de traitement de signaux (110) étant en outre configuré pour :
calculer une valeur moyenne de la vitesse verticale dans l'eau du navire (S1) à un moment donné pour chaque profondeur ; et
identifier, en tant que profondeur cible, la profondeur où la valeur moyenne calculée est sensiblement nulle.

3. Dispositif de mesure de vitesse de navire (1) selon la revendication 2,
le circuit de traitement de signaux (110) étant en outre configuré pour identifier la profondeur cible à partir d'une plage proche de la profondeur minimale où la valeur moyenne est sensiblement nulle.

4. Dispositif de mesure de vitesse de navire (1) selon la revendication 3,
le circuit de traitement de signaux (110) étant en outre configuré pour identifier la profondeur cible minimale où la moyenne est sensiblement nulle.

5. Dispositif de mesure de vitesse de navire (1) selon l'une quelconque des revendications 2 à 4,
le circuit de traitement de signaux (110) étant en outre configuré pour acquérir, en tant que vitesse dans l'eau du navire (S1), la valeur moyenne de la vitesse dans l'eau du navire (S1) dans la direction horizontale pour la profondeur cible à un moment donné.

6. Dispositif de mesure de vitesse de navire (1) selon l'une quelconque des revendications précédentes,
le transducteur (20) comprenant une pluralité d'oscillateurs ultrasonores dirigés dans des directions différentes les uns des autres ; et
le circuit de traitement de signaux (110) étant en outre configuré pour :
identifier la profondeur cible ; et
acquérir la vitesse dans l'eau du navire (S1) sur la base des signaux de réception respectivement délivrés en sortie par les multiples oscillateurs ultrasonores.

7. Procédé de mesure de vitesse de navire, comprenant l'étape consistant à :
par un transducteur (20) installé sur le navire, émettre des ondes ultrasonores dans l'eau et recevoir des ondes réfléchies desdites ondes ultrasonores ; et
**caractérisé par** les étapes consistant à :
identifier, sur la base du signal de réception de l'onde réfléchie, la profondeur cible où la vitesse dans l'eau du navire dans la direction verticale est sensiblement nulle ; et
acquérir, en tant que vitesse dans l'eau du navire, la vitesse dans l'eau du navire dans la direction horizontale par rapport à la profondeur cible.

8. Programme de mesure de vitesse de navire, configuré pour amener un module de traitement à exécuter un traitement, le programme étant **caractérisé en ce que** le traitement comprend les étapes consistant à :
identifier, sur la base d'un signal de réception d'une onde réfléchie d'une onde ultrasonore émise dans l'eau, la profondeur cible où la vitesse dans l'eau du navire dans la direction verticale est sensiblement nulle ; et
acquérir, en tant que vitesse dans l'eau, la vitesse dans l'eau du navire dans la direction horizontale par rapport à la profondeur cible.
